# EUROPÄISCHE PATENTSCHRIFT

(11) **EP 0 631 638 B1**
(45) Veröffentlichungstag und Bekanntmachung des Hinweises auf die Patenterteilung: **28.02.1996**
(21) Anmeldenummer: 93920530.8
(22) Anmeldetag: 16.03.1993
(51) Int. Cl.: D01F 6/92

(54) **POLYESTERFASER UND VERFAHREN ZU DEREN HERSTELLUNG**
POLYESTER FIBRES AND PROCESS FOR PRODUCING THE SAME
FIBRES EN POLYESTER ET LEUR PROCEDE DE PRODUCTION

(30) Priorität: 20.03.1992 DE 4208916
(43) Veröffentlichungstag der Anmeldung: 04.01.1995
(73) Patentinhaber: Akzo Nobel N.V., NL-6824 BM Arnhem (NL)
(72) Erfinder: BÖHRINGER, Bertram, D-5600 Wuppertal 2 (DE); SCHILO, Diederich, D-8763 Klingenberg (DE)
(74) Vertreter: Fett, Günter
(86) Internationale Anmeldenummer: EP9300609
(87) Internationale Veröffentlichungsnummer: WO9319231

(56) Entgegenhaltungen:
- EP-A- 0 047 464
- EP-A- 0 216 505

## Beschreibung

Die Erfindung betrifft eine Polyesterfaser, die in geringen Mengen weitere Zusatzstoffe enthält, und ein Verfahren zu deren Herstellung. Unter Polyesterfasern werden gemäß der Erfindung sowohl Endlosfilamente als auch endliche Fasern, wie beispielsweise Stapelfasern, verstanden.

Im Stand der Technik ist es bekannt, Polymermischungen aus Polyestern und geringen Mengen eines zweiten Polymeren mit hohen Geschwindigkeiten zwischen 1500 und 8000 m/min zu Polyestergarnen zu verspinnen. Definierte Mischungspolymere dafür werden für Polyester in der EP 0 047 464 beschrieben. Neben einer Reihe von acrylischen Polymeren wird dort insbesondere als polymeres Zusatzmittel für Polyethylenglykolterephthalat der Polymethacrylsäure-methylester empfohlen. Spätestens bei einer Spinngeschwindigkeit von 7500 m/min sind bei seiner Verwendung jedoch Fadenbrüche zu verzeichnen (vgl. ebenda Beispiel 3).

Aufgabe der vorliegenden Erfindung ist es, eine weitere Faser aus im wesentlichen Polyethylenterephthalat und weiteren Zusatzstoffen zur Verfügung zu stellen. Es ist auch Aufgabe der vorliegenden Erfindung, ein Verfahren zur Herstellung dieser Faser zur Verfügung zu stellen.

Die erfindungsgemäß gestellte Aufgabe wird gelöst durch eine Faser aus überwiegend Polyethylenterephthalat als Faserpolymeres, welche sich dadurch auszeichnet, daß sie 0,5 bis 5 Gew.%, bezogen auf das Faserpolymere, zu 50 bis 90% imidisierte Polymethacrylsäure-alkylester überwiegend in Form von Einlagerungen enthält. Diese Fasern weisen überraschenderweise im endverstreckten Zustand einen höheren Anfangsmodul auf als dies bei dem Zusatz von acrylischen Polymeren einschließlich des Polymethacrylsäure-methylesters der Fall ist. Der endverstreckte Zustand von Garnen ist immer dann erreicht, wenn die Garne die für ihren Einsatzzweck erforderlichen geringen Bruchdehnungen aufweisen. Diese Bruchdehnungen liegen üblicherweise bei textilen Garnen bei etwa 35%, während bei industriellen Garnen Bruchdehnungen von bevorzugt weniger als 15% angestrebt werden.

Die erfindungsgemäße Faser ist bevorzugt dadurch gekennzeichnet, daß sie 0,1 bis 5 Gew.%, bezogen auf das Faserpolymere, zu 50 bis 90% imidisierte Polymethacrylsäure-methylester enthält. Sie weist besonders günstige Eigenschaften auf, wenn der Anteil des imidisierten Polymethacrylsäure-alkylesters bzw. Polymethacrylsäure-methylesters 0,3 bis 1 Gew.% beträgt. Bevorzugt ist das Faserpolymere Polyethylenglykolterephthalat.

Die erfindungsgemäß gestellte Aufgabe wird auch gelöst durch ein Verfahren zur Herstellung von im wesentlichen aus Polyethylenterephthalat bestehenden schmelzgesponnenen Fasern durch Aufschmelzen des Faserpolymeren und anschließendem Schmelzspinnen, welches sich dadurch auszeichnet, daß dem Faserpolymeren 0,1 bis 5 Gew.%, bezogen auf das Faserpolymer, eines in diesem nur teilweise löslichen Polymeren aus im wesentlichen imidisierten Polymethacrylsäure-alkylestern, die durch Umsetzung von Polymethacrylsäure-alkylestern, deren Estergruppe einen Alkohol von 1 bis 6 C-Atomen enthält, mit einem primären Amin mit 1 bis 3 C-Atomen zu 50 bis 90% imidisiert sind, und deren Säure- und/oder Anhydridgehalt weniger als 0,25 Milliäquivalente pro g beträgt, und ggf. weitere Zusatzstoffe vor dem Schmelzspinnen zugemischt werden.

Überraschend wurde gefunden, daß Polymermischungen aus Polyestern und geringen Mengen einer konstitutionsmäßig eng begrenzten anderen Polymerart sich bei der erwähnten hohen Spinngeschwindigkeit und höher bei üblichen Fadenbruchzahlen problemlos verspinnen lassen. Selbst bei so hohen Spinngeschwindigkeiten wie beispielsweise 8000 m/min ergeben sich für das erfindungsgemäße Schmelzspinnverfahren die für die Polyester-Verspinnung üblichen, sehr niedrigen Fadenbruchzahlen.

Als Faserpolymere eignen sich alle hochschmelzenden fadenbildenden Polyester, insbesondere solche, welche vorwiegend, d.h. mindestens zu 80%, aus Ethylenglykolterephthalat-Einheiten bestehen. Die restlichen Dicarbonsäure- und Diolkomponenten dieser (Co-)Polyester können die bei der Herstellung verstreckter Polyestergebilde üblichen Co-Komponenten, wie beispielsweise Isophthalsäure, p,p'-Diphenyldicarbonsäure, alle möglichen Naphthalindicarbonsäuren, Hexahydroterephthalsäure, Adipinsäure, Sebacinsäure und Glykole, wie Trimethylen-, Tetramethylen-, Hexamethylen- und Dekamethylenglykol usw., sein. Ganz bevorzugter Polyester ist Polyethylenglykolterephthalat.

Die bevorzugten Polyester sollen eine möglichst hohe Viskosität, d.h. mindestens eine Lösungs-Viskosität von mehr als 1,5 besitzen, gemessen in 1 %iger m-Kresol-Lösung bei 20°C. Die angestrebten hohen Viskositätswerte können mit Hilfe bekannter Verfahren erzielt werden, wie z.B. der Kondensation in der Schmelze, einer zusätzlichen Nachkondensation in der Schmelze ohne oder mit Kondensationsbeschleuniger oder der Nachkondensation im festen Zustand.

Als polymere Zusatzmittel für das im wesentlichen aus Polyethylenterephthalat bestehende Faserpolymer eignen sich definierte, in dem Faserpolymeren nur teilweise lösliche Polymere aus im wesentlichen imidisierten Polymethacrylsäure-alkylestern, die durch Umsetzung von Polymethacrylsäure-alkylestern, deren Estergruppe einen Alkohol mit 1 - 6 C-Atomen enthält, mit einem primären Amin mit 1 bis 3 C-Atomen und vorzugsweise mit Methylamin zu 50 bis 90% imidisiert sind und deren Säure- und/oder Anhydridgehalt weniger als 0,25 Milliäquivalente pro g beträgt. Ihre Zusatzmenge kann 0,1 bis 5 Gew.%, bezogen auf das Faserpolymer betragen, wobei die höheren Gewichtsprozentsätze für sehr hochmolekulare Polyethylenglykolterephthalate gelten, da sie bei den üblichen Molekulargewichten unter Umständen schon zu Fadenbrüchen führen können. Bevorzugt wird jedoch ein Zusatz von nur 0,3 bis 1,0 Gewichtsprozent der imidisierten Polymethacrylsäure-alkylester, bezogen auf das Faserpolymer, der im allgemeinen schon ausreichend ist.

Die imidisierten Polymethacrylsäure-alkylester können bis zu 10 Molprozent noch anderer Monomer-Einheiten enthalten, z.B. einfach oder mehrfach ungesättigte Monomere, wie Styrol, Acrylnitril und Butadien. Bevorzugt werden jedoch imidisierte Polymethacrylsäurealkylester, die durch Imidisierung der reinen methacrylischen Homopolymeren, insbesondere des reinen Polymethacrylsäure-methylesters, mit Methylamin erhalten worden sind und den obigen Imidisierungsgrad und Säure- und/oder Anhydridgehalt aufweisen. Der Imidisierungsgrad der imidisierten Polymethacrylsäure-alkylester sollte umso höher gewählt werden, je höher die Viskosität des verwendeten Polyethylenterephthalats ist. Das Molekulargewicht der Zusatzmittel ist hingegen in sehr weiten Grenzen nicht kritisch. Im allgemeinen wird ein Molekulargewichtsbereich von 50 000 bis 300 000 bevorzugt. Insbesondere werden die im Handel erhältlichen und von der Firma Rohm and Haas Company vertriebenen Typen Paraloid^{R} EXL 4241, Paraloid^{R} EXL 4240, Paraloid^{R} EXL 4261 und Paraloid^{R} EXL 4260 bevorzugt. Überraschend ist, daß diese Stoffe als Zusatzstoffe zu dem Faserpolymeren die Bruchdehnung gegenüber dem reinen Faserpolymeren erhöhen, insbesondere deswegen, weil diese Stoffe als Faserpolymere nach der Schmelzspinnung sehr niedrige, in der Regel unter 10% liegende Bruchdehnungen aufweisen. Die polymeren Zusatzstoffe können den Polyestern entweder jeweils als Einzelstoff oder als Stoffgemisch, z.B. mittels eines Extruders, homogen einverleibt werden.

Die Herstellung der imidisierten Polymethacrylsäure-alkylester ist bekannt (US-PS 4,246,374, GB-PS 21 01 139, EP 0 216 505). In der EP 0 216 505 werden auch in Table XVIII auf Seite 65 Polymerblends aus imidisiertem Polymethacrylsäure-methylester und Polyethylenglykolterephthalat im Gewichtsverhältnis von 90/10 bis 10/90 beschrieben, die als Folge der an sich bekannten Additionswirkung eine übliche Modifizierung einer Vielzahl von physikalischen Eigenschaften des jeweils thermoplastischen Hauptpolymeren bezwecken.

Nicht bekannt ist jedoch die erfindungsgemäße Verwendung und Eignung der imidisierten Polymethacrylsäure-alkylester für ein Verfahren zur Herstellung von Polyester-Filamentgarnen nach dem Schnellspinnen und Superschnellspinnen mit Abzugsgeschwindigkeiten von 500 bis 10000 m/min und mehr. Daß hierbei sogar in bevorzugter Weise in aller Regel mit Zusatzmengen von unter 1 Gewichtsprozent gearbeitet werden kann und sich bei einer solchen Verfahrensweise darüber hinaus in überraschender Weise bei den endverstreckten Garnen eine Erhöhung des Anfangsmoduls der Polyester-Filamentgarne erzielen läßt, war aus dem Stand der Technik nicht abzuleiten.

Die Zumischung der Zusatzstoffe zum Polyethylenterephthalat erfolgt günstigerweise vor dem Extruder, wobei das Faserpolymer und die Zusatzstoffe in Granulatform vorliegen sollten. Der Extruder sorgt hierbei bei der Aufschmelzung der Granulate für eine gleichmäßige Verteilung der Zusatzstoffe im Faserpolymer. Weitere statische und/oder dynamische Mischer können in der Schmelzeleitung und/oder direkt vor dem Spinnpack vorgesehen sein.

Die Zumischung kann aber auch derart erfolgen, daß die Schmelze aus Faserpolymer mit der Schmelze der Zusatzstoffe über statische und/oder dynamische Mischer vermischt wird.

Zur Herstellung der erfindungsgemäßen Fasern eignen sich praktisch alle bekannten Spinnverfahren, wobei jedoch auf eine ausgeprägte Retarded-Cooling-Zone (Retarded-Cooling = verzögerte Abkühlung direkt unter der Spinndüse) verzichtet werden sollte. Ein kurzes, die Kühlluft von der Spinndüse abhaltendes, an die Spinndüse anschließendes Rohr begünstigt den Schmelzspinnvorgang. Eine Länge von wenigen cm für dieses Rohr hat sich bestens bewährt. Die erfindungsgemäßen Fasern lassen sich praktisch bei allen technisch möglichen Aufwickelgeschwindigkeiten, insbesondere bei Aufwickelgeschwindigkeiten von 500 bis 10 000 m/min problemlos herstellen.

Es ist Verdienst der vorliegenden Erfindung, daß mit dem erfindungsgemäßen Verfahren selbst bis zu Aufwickelgeschwindigkeiten von bis zu 8000 m/min teilweise orientierte Garne, d.h. Garne, die noch nicht auf die für den jeweiligen Einsatzzweck erforderliche Bruchdehnung verstreckt sind, hergestellt werden können. Diese Garne sind somit bestens für die Weiterverarbeitung geeignet. Textile Garne lassen sich beispielsweise ohne weiteres zu texturierten Garnen mit den hierzu üblichen Verfahren herstellen. Industrielle Garne sind für die Herstellung von Reifencorden bestens geeignet.

Als Schmelzspinnverfahren eignen sich besonders Verfahren, wie sie beispielsweise in DE-PS 29 25 006 oder in DE-A-41 29 521 (veröffentlich am 11.03.93) und EP-A-0 530 652 (veröffentlich am 10.03.93) beschrieben sind.

Die Erfindung wird anhand nachfolgender Beispiele näher erläutert.

Zur Herstellung von textilen Garnen wurde als Faserpolymer ein Polyethylenterephthalat mit einer Lösungsviskosität von 1,63 verwendet, während als Zusatzstoff Paraloid^{R} EXL 4241 eingesetzt wurde. Der Schmelzspinnprozeß wurde bei verschiedenen Aufwickelgeschwindigkeiten durchgeführt. Zur Herstellung von Filamentgarn mit einer Aufwickelgeschwindigkeit von 3500 m/min wurde das frisch gesponnene Garn über eine übliche Queranblasung gekühlt, danach über zwei Galetten oder einer Galette und einer Nutwalze geführt und anschließend aufgewickelt. In einem zweiten Schritt wurden diese Garne verstreckt. Zur Herstellung von Filamentgarn bei Aufwickelgeschwindigkeiten von 6000, 7000 und 8000 m/min wurde eine Vorrichtung verwendet, wie sie in DE-A-41 29 521 (veröffentlich am 11.03.93 beschrieben ist. Die mit 6000 und 7 000 m/min ersponnenen Garne wurden in einem zweiten Schritt verstreckt. Die wesentlichen Verfahrensparameter, die Eigenschaften der ersponnenen Garne sowie der verstreckten Garne sind in Tabelle 1 aufgeführt. Sämtliche Versuche verliefen störungsfrei. Die Eigenschaften des unverstreckten Garnes zeigen, daß aufgrund des Zusatzes selbst sehr schnellgesponnene Garne einer für Textilfasern üblichen Weiterverarbeitung unterzogen werden können. Bei den verstreckten Garnen zeigt sich eine deutliche Erhöhung des Moduls.

Zur Herstellung von industriellen Garnen wurde als Faserpolymer ein Polyethylenterephthalat mit einer Lösungs-viskosität von 2,04 verwendet, während als Zusatzstoff Paraloid^{R} EXL 4240 bzw. Paraloid^{R} EXL 4260 eingesetzt wurde. Granulate des Faserpolymers und der Zusätze wurden dem Extruder in dosierter Menge zugeführt. Vor dem Spinnpack sorgte ein dynamischer Mischer für gute Durchmischung der Schmelze. Der Schmelzspinnprozeß wurde bei Aufwickelgeschwindigkeiten von 500, 2000 und 4000 m/min durchgeführt.

Das frischgesponnene Garn wurde mittels Queranblasung gekühlt, danach über zwei Galetten geführt und dann aufgewickelt. In einem zweiten Schritt wurden die Garne verstreckt.

Die wesentlichen Verfahrensparameter sind in Tabelle 2 für 500 m/min-Gespinste, in Tabelle 3 für 2000 m/min-Gespinste und in Tabelle 4 für 4000 m/min-Gespinste aufgeführt. Sämtliche Versuche verliefen störungsfrei. Die Eigenschaften der verstreckten Garne beweisen die Brauchbarkeit dieser Garne für die Herstellung von Reifencorden.

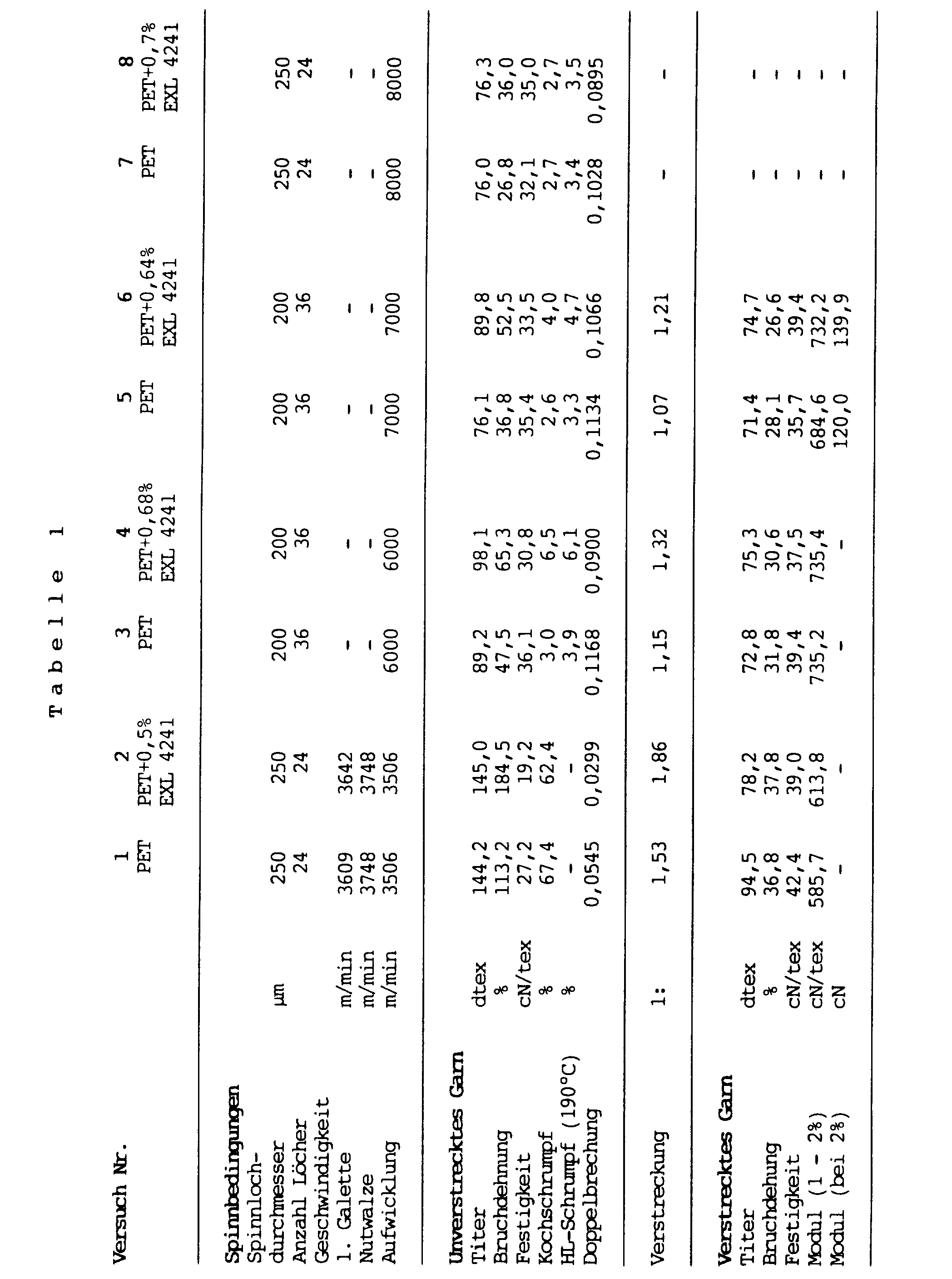

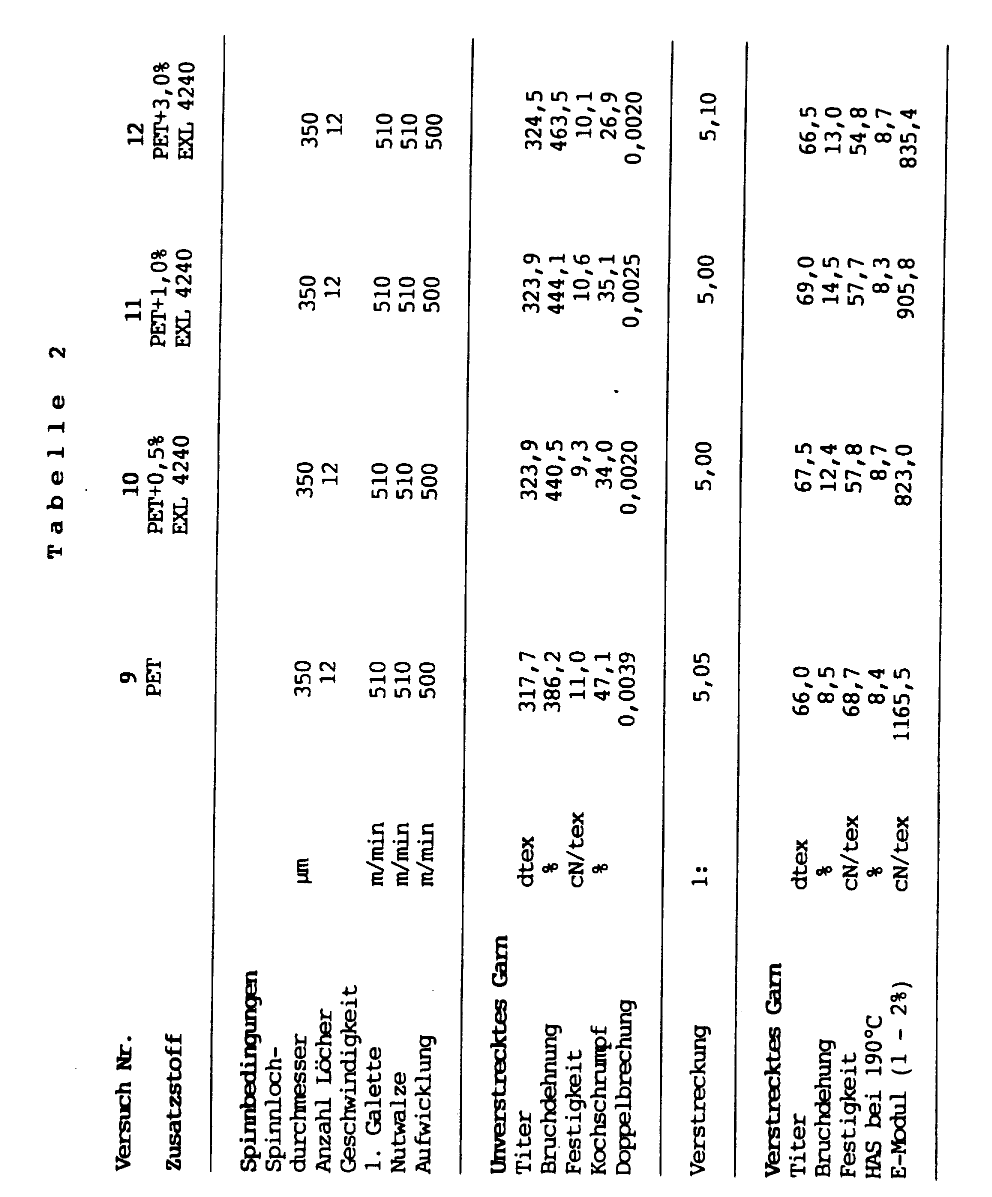

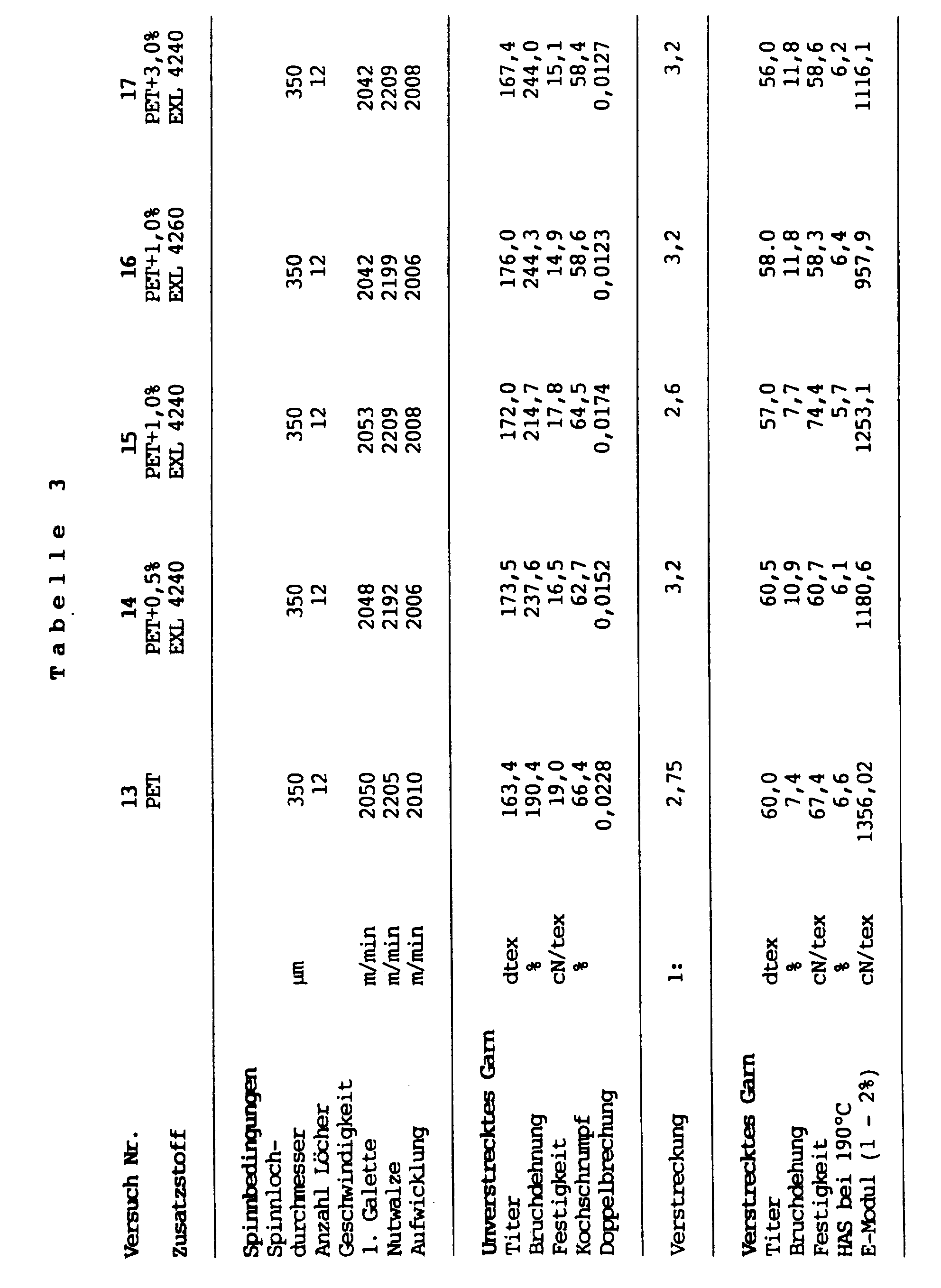

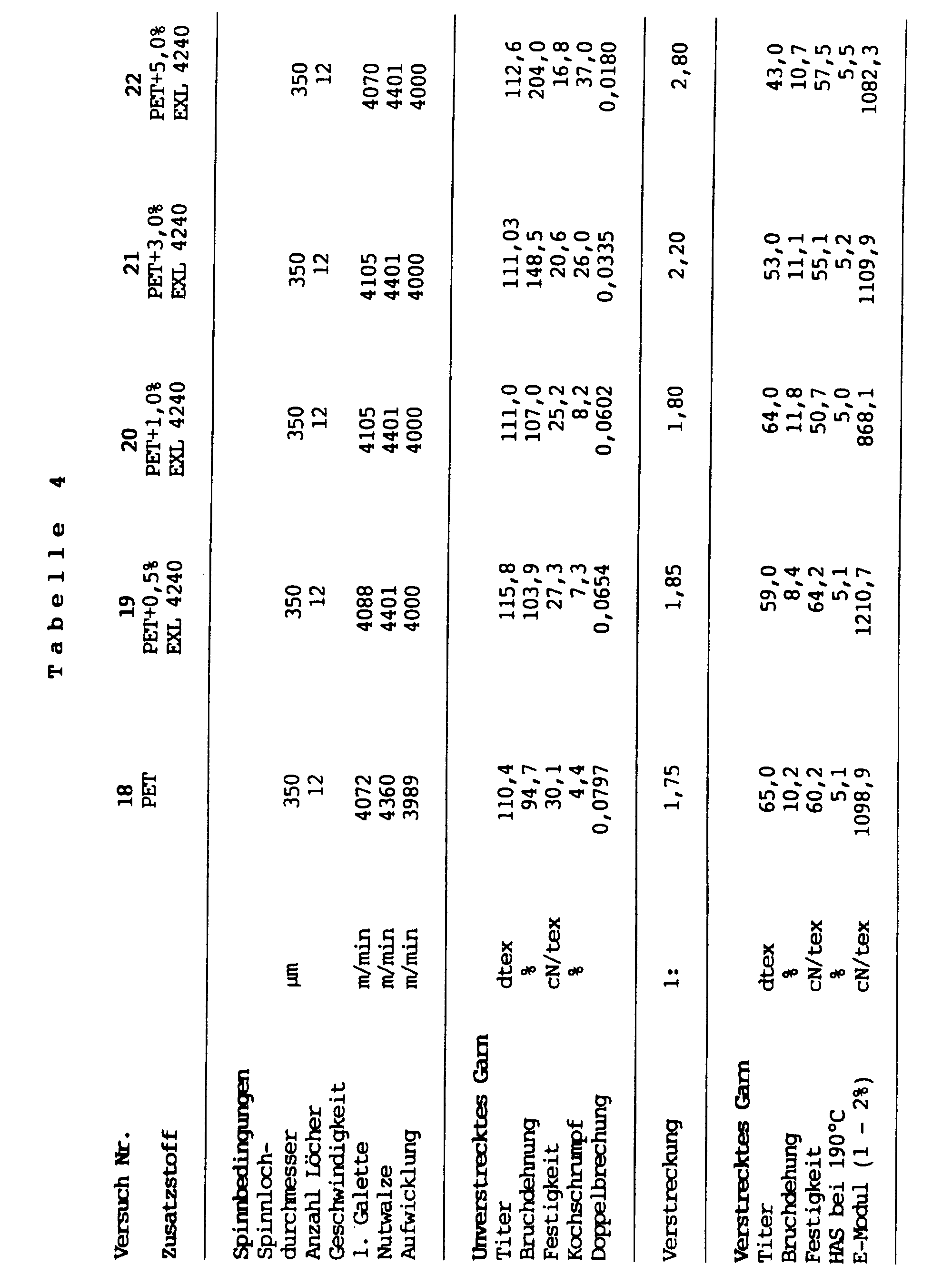

## Patentansprüche

1. Faser aus überwiegend Polyethylenterephthalat als Faserpolymeres, dadurch gekennzeichnet, daß sie 0,1 bis 5 Gew.%, bezogen auf das Faserpolymere, eines zu 50 bis 90% imidisierte Polymethacrylsäure-alkylesters, überwiegend in Form von Einlagerungen, enthält.

2. Faser nach Anspruch 1, dadurch gekennzeichnet, daß sie 0,1 bis 5 Gew.%, bezogen auf das Faserpolymere, eines zu 50 bis 90% imidisierte Polymethacrylsäure-methylesters enthält.

3. Verfahren zur Herstellung von im wesentlichen aus Polyethylenterephthalat bestehenden schmelzgesponnenen Fasern durch Aufschmelzen des Faserpolymeren und anschließendem Schmelzspinnen, dadurch gekenzeichnet, daß dem Faserpolymeren 0,1 bis 5 Gew.%, bezogen auf das Faserpolymer, eines in diesem nur teilweise löslichen Polymeren aus im wesentlichen imidisierten Polymethacrylsäure-alkylestern, die durch Umsetzung von Polymethacrylsäure-alkylestern, deren Estergruppe einen Alkohol mit 1 bis 6 C-Atomen enthält, mit einem primären Amin mit 1 bis 3 C-Atomen zu 50 bis 90% imidisiert sind, und deren Säure- und/oder Anhydridgehalt weniger als 0,25 Milliäquivalente pro g beträgt, und gegebenenfalls weitere Zusatzstoffe vor dem Schmelzspinnen zugemischt werden.

4. Verfahren nach Anspruch 3, dadurch gekennzeichnet, daß dem Faserpolymeren 0,3 bis 1,0 Gew.%, bezogen auf das Faserpolymer, der imidisierten Polymethacrylsäure-alkylester zugemischt werden.

5. Verfahren nach Anspruch 3 oder 4, dadurch gekennzeichnet, daß dem Faserpolymeren imidisierte Polymethacrylsäure-alkylester, die durch Imidisierung der reinen methacrylischen Homopolymeren, insbesondere des reinen Polymethacrylsäure-methylesters, mit Methylamin erhalten worden sind, zugemischt werden.

6. Verfahren nach einem oder mehreren der Ansprüche 3 bis 5, dadurch gekennzeichnet, daß dem Faserpolymeren imidisierte Polymethacrylsäure-alkylester mit einem Molekulargewicht von 50 000 bis 300 000 zugemischt werden.

7. Verfahren nach einem oder mehreren der Ansprüche 3 bis 6, dadurch gekennzeichnet, daß das Faserpolymere Polyethylenglykolterephthalat ist.

8. Verfahren nach einem oder mehreren der Ansprüche 3 bis 7, dadurch gekennzeichnet, daß Granulate aus imidisierten Polymethacrylsäure-alkylestern einem Granulatstrom aus Polyethylenterephthalat vor dem Extruder zugeführt werden.

9. Verfahren nach einem oder mehreren der Ansprüche 3 bis 7, dadurch gekennzeichnet, daß Schmelze aus imidisierten Polymethacrylsäure-alkylestern dem Extruder oder den Schmelzeleitungen zwischen Extruder und Spinndüse der Schmelze aus Polyethylenterephthalat zugeführt und gegebenfalls beide Schmelzen gemischt werden.

10. Verfahren nach einem oder mehreren der Ansprüche 3 bis 9, dadurch gekennzeichnet, daß das Polymer als Schmelze durch übliche Spinndüsen extrudiert wird, wonach die aus der Schmelze erstarrten Filamente mit einer Geschwindigkeit von 500 bis 10 000 m/min aufgewickelt werden.

11. Verfahren nach einem oder mehreren der Ansprüche 3 bis 9, dadurch gekennzeichnet, daß zur Herstellung von teilweise orientierten Garnen die Filamente mit Geschwindigkeiten von bis zu 8 000 m/min aufgewickelt werden.

## Claims

1. Fibre predominantly made from polyethylene terephthalate as the fibre polymer, characterised in that it contains 0.1 to 5 wt.%, relative to the fibre polymer, of a 50 to 90% imidised polymethacrylic acid alkyl ester, predominantly in the form of inclusions.

2. Fibre according to claim 1, characterised in that it contains 0.1 to 5 wt.%, relative to the fibre polymer, of a 50 to 90% imidised polymethyl methacrylate.

3. Process for the production of melt-spun fibres substantially consisting of polyethylene terephthalate by melting the fibre polymer and subsequently spinning the melt, characterised in that 0.1 to 5 wt.%, relative to the fibre polymer, of a polymer which is only partially soluble in the fibre polymer and is made of substantially imidised polymethacrylic acid alkyl esters, which are 50 to 90% imidised by the reaction of polymethacrylic acid alkyl esters, the ester group of which contains an alcohol having 1 to 6 C atoms, with a primary amine with 1 to 3 C atoms, and the acid and/or anhydride content of which esters is less than 0.25 milliequivalents per g, is mixed into the fibre polymer, optionally with further additives, prior to melt spinning.

4. Process according to claim 3, characterised in that 0.3 to 1.0 wt.%, relative to the fibre polymer, of the imidised polymethacrylic acid alkyl esters are mixed into the fibre polymer.

5. Process according to claim 3 or 4, characterised in that imidised polymethacrylic acid alkyl esters which were obtained by imidisation of pure methacrylic homopolymers, in particular of pure polymethyl methacrylate, with methylamine are mixed into the fibre polymer.

6. Process according to one or more of claims 3 to 5, characterised in that imidised polymethacrylic acid alkyl esters with a molecular weight of 50000 to 300000 are mixed into the fibre polymer.

7. Process according to one or more of claims 3 to 6, characterised in that the fibre polymer is polyethylene glycol terephthalate.

8. Process according to one or more of claims 3 to 7, characterised in that pellets of imidised polymethacrylic acid alkyl esters are introduced into a stream of polyethylene terephthalate pellets upstream from the extruder.

9. Process according to one or more of claims 3 to 7, characterised in that a melt of imidised polymethacrylic acid alkyl esters is introduced into the polyethylene terephthalate melt in the extruder or melt lines between the extruder and spinneret and the two melts are optionally mixed.

10. Process according to one or more of claims 3 to 9, characterised in that the polymer is extruded as a melt through conventional spinnerets, whereupon the filaments solidified from the melt are wound at a speed of 500 to 10000 m/min.

11. Process according to one or more of claims 3 to 9, characterised in that the filaments are wound at speeds of up to 8000 m/min in order to produce partially oriented yarns.

## Revendications

1. Fibre composée majoritairement de poly(téréphtalate d'éthylène), considéré comme polymère constituant la fibre, caractérisée en ce qu'elle contient de 0,1 à 5 % en poids, par rapport au polymère constituant la fibre, d'un poly(méthacrylate d'alkyle) dont 50 à 90 % des groupes latéraux sont sous forme de groupes imide, principalement sous forme d'inclusions.

2. Fibre conforme à la revendication 1, caractérisée en ce qu'elle contient de 0,1 à 5 % en poids, par rapport au polymère constituant la fibre, d'un poly(méthacrylate de méthyle) dont 50 à 90 % des groupes latéraux sont sous forme de groupes imide.

3. Procédé permettant la préparation de fibres filées par voie fondue composées majoritairement de poly(téréphtalate d'éthylène), par fusion du polymère constituant la fibre et filage par voie fondue, caractérisé en ce que l'on mélange au polymère constituant la fibre avant le filage par voie fondue de 0,1 à 5 % en poids, rapporté au polymère constituant la fibre, d'un poly(méthacrylate d'alkyle) à groupes imide obtenu en faisant réagir de 50 à 90 % des groupes latéraux d'un poly(méthacrylate d'alkyle) à résidu alkyle en C₁₋₆ avec une amine primaire comportant de 1 à 3 atomes de carbone, le poly(méthacrylate d'alkyle) n'étant que partiellement soluble dans le polymère constituant la fibre et ayant une teneur en fonctions acide et/ou anhydride inférieure à 0,25 milliéquivalents par gramme, et éventuellement d'autres additifs.

4. Procédé conforme à la revendication 3, caractérisé en ce que l'on mélange au polymère constituant la fibre de 0,3 à 1,0 % en poids, par rapport au polymère constituant la fibre, d'un poly(méthacrylate d'alkyle) à groupes imide.

5. Procédé conforme à la revendication 3 ou 4, caractérisé en ce que l'on mélange au polymère constituant la fibre du poly(méthacrylate d'alkyle) à groupes imide obtenu par imidation des homopolymères méthacryliques purs, en particulier de poly(méthacrylate de méthyle) pur, par de la méthylamine.

6. Procédé conforme à une ou plusieurs des revendications 3 à 5, caractérisé en ce que l'on mélange au polymère constituant la fibre du poly(méthacrylate d'alkyle) à groupes imide ayant une masse moléculaire comprise entre 50 000 et 300 000.

7. Procédé conforme à une ou plusieurs des revendications 3 à 6, caractérisé en ce que le polymère constituant la fibre est le poly(téréphtalate d'éthylèneglycol).

8. Procédé conforme à une ou plusieurs des revendications 3 à 7, caractérisé en ce que des granulés de poly(méthacrylate d'alkyle) à groupes imide sont ajoutés à un flux de granulés de poly(téréphtalate d'éthylène) en amont de l'extrudeuse.

9. Procédé conforme à une ou plusieurs des revendications 3 à 7, caractérisé en ce que l'on ajoute au poly(téréphtalate d'éthylène) fondu, en amont de l'extrudeuse ou au niveau des conduits reliant l'extrudeuse à la filière, du poly(méthacrylate d'alkyle) à groupes imide à l'état fondu et en ce que l'on mélange éventuellement les deux polymères fondus.

10. Procédé conforme à une ou plusieurs des revendications 3 à 9, caractérisé en ce que le polymère est extrudé à l'état fondu à travers des filières habituelles, les filaments obtenus après solidification de la masse fondue étant ensuite enroulés à une vitesse comprise entre 500 et 10 000 m/min.

11. Procédé conforme à une ou plusieurs des revendications 3 à 9, caractérisé en ce que l'on obtient des fibres partiellement orientées en enroulant les filaments à des vitesses allant jusqu'à 8 000 m/min.
